Europäisches Patentamt

(19) European Patent Office

Office européen des brevets

(11) Veröffentlichungsnummer: 0 043 033

A1

(12) **EUROPÄISCHE PATENTANMELDUNG**

(21) Anmeldenummer: 81104674.7

(22) Anmeldetag: 17.06.81

(51) Int. Cl.³: **C 03 B 9/28**
C 03 B 9/195, C 03 B 9/353

(30) Priorität: 28.06.80 DE 3024429

(43) Veröffentlichungstag der Anmeldung:
06.01.82 Patentblatt 82/1

(84) Benannte Vertragsstaaten:
AT BE CH FR GB IT LI LU NL SE

(71) Anmelder: HERMANN HEYE
Allee
D-3063 Obernkirchen(DE)

(72) Erfinder: Seidel, Hans-Georg
Gerhart-Hauptmann-Weg 7
D-3260 Rinteln(DE)

(72) Erfinder: Schaar, Lothar
Am Südbach 117
D-3061 Heuerssen(DE)

(72) Erfinder: Monden, Norbert
Nelkenweg 6
D-3262 Auetal 2(DE)

(74) Vertreter: Kosel, Peter, Dipl.-Ing. et al,
Patentanwälte Dipl.-Ing. Horst Röse Dipl.-Ing. Peter
Kosel Postfach 129
D-3353 Bad Gandersheim(DE)

(54) Tragelement für Mündungsformen einer Hohlkörperherstellungsmaschine.

(57) Bei einem Tragelement (8) für relativ zueinander bewegbare Mündungswerkzeughalterteile (55;56), die jeweils ein
Mündungswerkzeugteil (4;5) eines geteilten Mündungswerkzeugs wenigstens einer Mündungsform (2;3) einer Maschine
zur Herstellung von Hohlkörpern (81) aus Glas oder dergleichen halten, weist jede Mündungsform (2;3) einen ungeteilten, von dem Mündungswerkzeug gehaltenen führungsring
(6) auf, der sich mit einem Außenabschnitt (70) aus dem
Mündungswerkzeug heraus erstreckt. An dem Tragelement
(8) ist eine Zentriervorrichtung (67) angeordnet, die mit dem
Außenabschnitt (70) jedes Führungsrings (6) zur Fixierung
der Längsachse jedes Führungsrings (6) relativ zu dem
Tragelement (8) zusammenwirkt. Die Zentriervorrichtung
(67) kann ein den Außenabschnitt (70) in einer Durchbrechung (68;69) aufnehmendes Blech aufweisen und schwenkbar an dem Tragelement (8) gelagert sein.

Fig. 2

Croydon Printing Company Ltd.

## Tragelement für Mündungsformen einer Hohlkörperherstellungsmaschine

Die Erfindung betrifft ein Tragelement für relativ zueinander bewegbare Mündungswerkzeughalterteile, die jeweils ein Mündungswerkzeugteil eines geteilten Mündungswerkzeugs wenigstens einer Mündungsform einer Maschine zur Herstellung von Hohlkörpern aus Glas oder ähnlichen thermoplastischen Stoffen halten, wobei die wenigstens eine Mündungsform einen einen Endbereich einer Mündung des Hohlkörpers formenden, ungeteilten, von dem Mündungswerkzeug gehaltenen, sich mit einem Außenabschnitt aus dem Mündungswerkzeug heraus erstreckenden Führungsring aufweist.

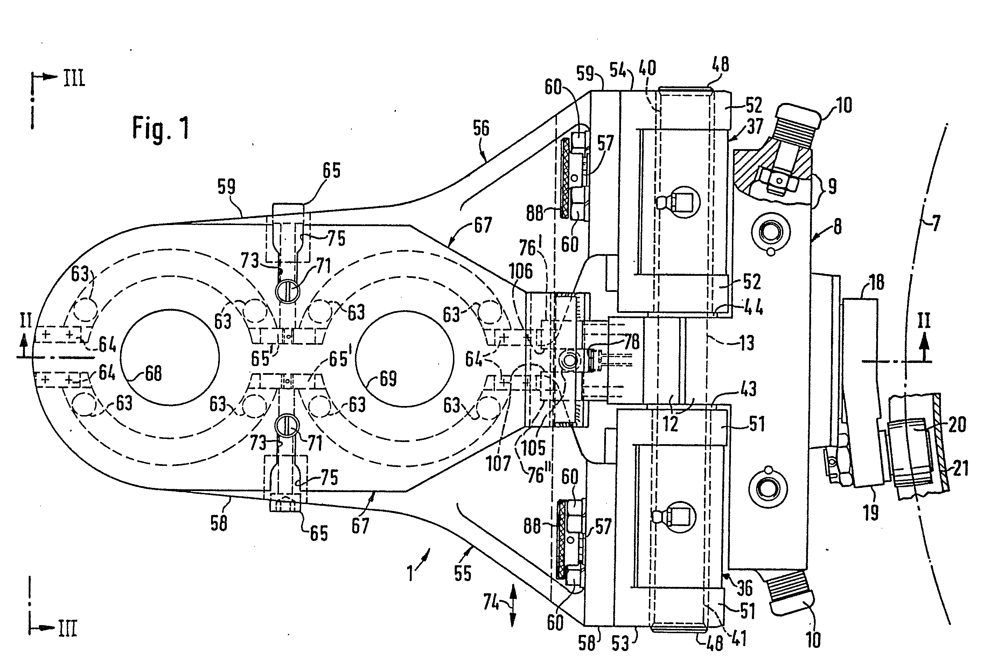

Bei einem bekannten Tragelement dieser Art (DE-PS 23 24 953 der Anmelderin) sind die Führungsringe drehend antreibbar und ihre Längsachsen weder beim Einfachformbetrieb (Fig. 1 bis 4 und 10) noch beim Doppelformbetrieb (Fig. 5 bis 9, 14 und 15) relativ zu dem Tragelement fixiert. Beim Öffnen der Mündungswerkzeuge kann daher jeder Führungsring je nach den Reibungsverhältnissen entweder von dem einen oder dem anderen Mündungswerkzeugteil mitgenommen werden. Dabei bewegt sich die Längsachse des Führungsrings in Querrichtung relativ zu dem Tragelement. Das hat zur Folge, daß die Mündung des Hohlkörpers unsymmetrisch unterstützt und festgehalten wird und sich deformieren kann. Der Hohlkörper hängt sich schief und fällt so zu spät und/oder als Ausschuß aus der Mündungsform heraus. Nachteilig für den anschließenden Transport und die Nachbehandlung der fertigen Hohlkörper ist ferner, daß der fertige Hohlkörper nicht an einer definierten Stelle aus seiner Mündungsform abgegeben wird. Diese einseitige Mitnahme der Führungsringe kann auch beim Öffnen und Schließen der Mündungsformen zu entsprechend einseitigem Verschleiß der Mündungsformen führen.

Der Erfindung liegt die Aufgabe zugrunde, den Ausschuß herabzusetzen, die Fertigungsqualität zu steigern, die fertigen Hohlkörper zeitlich und örtlich definiert aus den Mündungsformen abzugeben und die Lebensdauer der Mündungsformen zu erhöhen.

Diese Aufgabe ist nach der Erfindung dadurch gelöst, daß eine an dem Tragelement angeordnete Zentriervorrichtung mit dem Außenabschnitt jedes Führungsrings zur Fixierung der Längsachse jedes Führungsrings relativ zu dem Tragelement zusammenwirkt. Das Tragelement kann im Betrieb stationär oder längs einer Bahn intermittierend oder kontinuierlich bewegbar sein. Es kann sich dabei z.B. um den Invertarm einer I.S.-Glasformmaschine oder um einen Bestandteil bekannter Transporteinheiten (DE-PS 1 596 472 (Fig. 7 bis 16) der Anmelderin und DE-AS 1 704 112 (Fig. 8 bis 10) der Anmelderin handeln. In allen Fällen sorgt die Zentriervorrichtung dafür, daß auch bei zur Abgabe der Hohlkörper sich öffnenden Mündungswerkzeugen die Längsachsen der Führungsringe zumindest annähernd in ihrer Relativlage bezüglich des Tragelements verbleiben. Dies gewährleistet, daß die Hohlkörper im Betriebszyklus zeitlich definiert und in einer zumindest annähernd genau definierten Abgabeposition an eine Absetz- oder Kühlplatte oder eine andere Übernahmevorrichtung der Maschine übergeben werden können. Deformationen der Mündungen beim Ausformen aus den Mündungsformen sind vermieden. Ferner ist das Verschleißverhalten zwischen den Führungsringen und den ihnen zugeordneten Mündungswerkzeugteilen vergleichmäßigt.

Bei Ausbildung gemäß Anspruch 2 hat die Zentriervorrichtung in günstiger Weise nur geringe Masse und geringe Höhenerstreckung, so daß eine Behinderung oder gar Beeinträchtigung der übrigen Maschinenteile nicht eintritt.

Die Maßnahme gemäß Anspruch 3 führt zur Erleichterung der Montage und Demontage der Führungsringe und/oder Mündungswerkzeuge und/oder Mündungswerkzeughalterteile. Bei Bedarf kann auch die Zentriervorrichtung leicht und schnell gegen eine andere ausgetauscht werden.

Die Merkmale des Anspruchs 4 führen mit einfachen Mitteln zu zumindest annähernd exakter axialer Festlegung der Schwenkachse und damit der gesamten Zentriervorrichtung. Durch die Größe des axialen Bewegungsspiels der Schwenkachse und durch die Größe des Spiels zwischen der Zentriervorrichtung und den Außenabschnitten der Führungsringe läßt sich jede gewünschte Positioniergenauigkeit für die aus den Mündungsformen abzugebenden fertigen Hohlkörper erreichen.

Die Maßnahme gemäß Anspruch 5 erleichtert den Ausbau und Einbau der Zentriervorrichtung.

Durch Anspruch 6 ist für eine definierte Betriebsstellung der Zentriervorrichtung mit einfachen Mitteln gesorgt.

Anspruch 7 stellt mit einfachen Mitteln sicher, daß die Zentriervorrichtung während des Betriebs in ihrer Betriebsstellung verbleibt. Die Maßnahme erhöht also die Betriebssicherheit.

Das Merkmal des Anspruchs 8 stellt eine bei Verschiebung der Mündungswerkzeughalterteile besonders einfache Betriebssicherung dar.

Die erfindungsgemäße Lehre läßt sich mit gleichem Vorteil auf gemäß der vorerwähnten DE-PS 23 24 953 um ihre Längsachse drehbare als auch auf nicht drehbare Führungsringe anwenden.

Die Erfindung wird nachfolgend anhand des in den Zeichnungen dargestellten Ausführungsbeispiels näher erläutert. Es zeigen:

Fig. 1 die Draufsicht auf eine für Doppelformbetrieb ausgerüstete Transporteinheit ohne Mündungsformen,

Fig. 2 die Schnittansicht nach Linie II-II in Fig. 1, jedoch mit eingesetzten Mündungsformen und

Fig. 3 die Stirnansicht gemäß Linie III-III in Fig. 1.

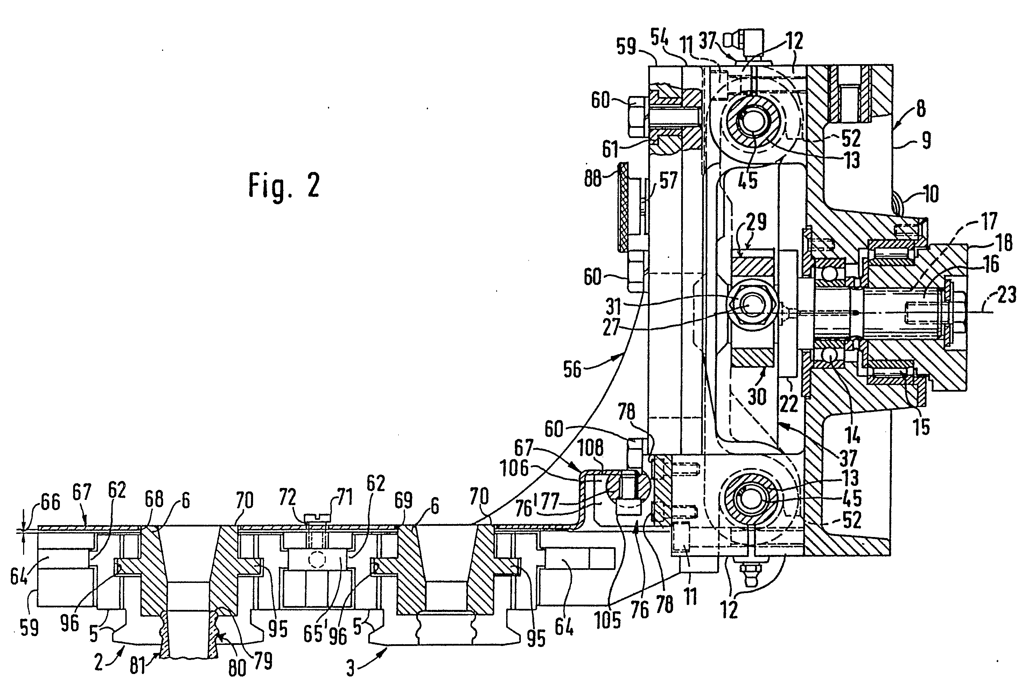

Fig. 1 zeigt eine Transporteinheit 1 für zwei Mündungsformen 2 und 3, die jeweils zwei Mündungswerkzeugteile 4
und 5 und einen darin aufgehängten ungeteilten Führungsring
6 aufweisen (vgl. Fig. 2 ). Jeder Führungsring 6 greift mit
einem äußeren Ringflansch 95 in eine entsprechende Ringnut
96 der Mündungswerkzeugteile 4,5 mit Spiel in Umfangsrichtung und in axialer Richtung ein. Die Transporteinheit 1 bewegt sich entlang einer kreisförmigen Bahn 7 z. B. in der
Weise, die in der DE-AS 1 704 112 der Anmelderin im einzelnen offenbart ist.

Dabei ist ein Tragelement 8 der Transporteinheit 1 an
einem nicht dargestellten Transportarm einer zugehörigen
Glasformmaschine auf einer zu der Bahn 7 konzentrischen
kreisförmigen Bahn geführt. Ein Rahmen 9 des Tragelements 8
weist zu beiden Seiten in Richtung der Bewegungsbahn vorragende Puffer 10 auf, die eine eventuelle Berührung mit den angrenzenden Tragelementen 8 dämpfen sollen. Gemäß der vorerwähnten DE-AS 1 704 112 sind nämlich die einzelnen Transporteinheiten 1 der Glasformmaschine unabhängig voneinander
auf der Bahn 7 bewegbar.

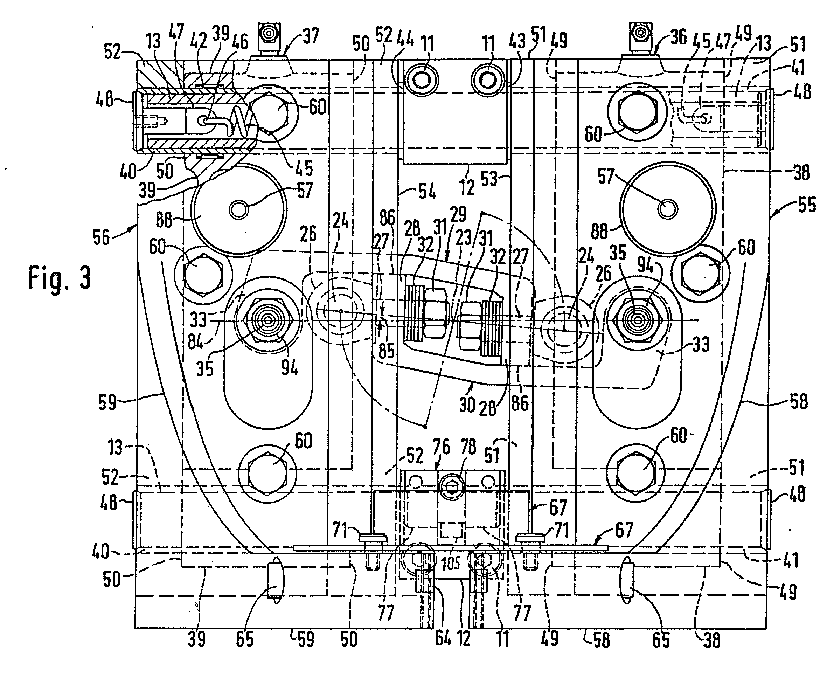

Der Rahmen 9 trägt oben und unten in der Mitte jeweils
ein durch Schrauben 11 (Fig. 2 und 3) klemmbares Lager 12
zur Fixierung einer zu beiden Seiten des Lagers 12 herausragenden, rohrförmigen Führungsstange 13.

Wie Fig. 2 besonders deutlich zeigt, ist in dem Rahmen
9 über Wälzlager 14 und 15 eine Welle 16 drehbar gelagert,
deren äußeres Ende über eine Verschraubung 17 eine Nabe 18
eines Hebels 19 (Fig. 1) trägt. An dem freien Ende des Hebels
19 ist eine Antriebsrolle 20 drehbar gelagert, die durch ein
im Querschnitt U-förmiges Kurvenstück 21 heb- und senkbar
ist. Solche Kurvenstücke 21 brauchen nur an denjenigen Stellen der Bahn 7 vorgesehen zu sein, an denen die Mündungswerkzeugteile 4,5 geöffnet werden sollen. Normalerweise wird
dies nur in einer Abgabestation der Glasformmaschine der
Fall sein, in der die fertigen Hohlkörper aus den Mündungsformen 2,3 abgegeben werden.

An dem anderen Ende der Welle 16 ist eine Schaltplatte 22 befestigt, von der aus sich in Fig. 2 nach links zwei symmetrisch zu einer Längsachse 23 der Welle 16 angeordnete Schaltzapfen 24 (Fig. 3) erstrecken. Auf jedem der Schaltzapfen 24 ist ein Auge 26 eines Bolzens 27 gelagert, der einen Schenkel 28 eines U-förmigen Bügels 29 oder 30 durchdringt und an seinem freien, mit Gewinde versehenen Ende eine Mutter 31 trägt. Zwischen der Mutter 31 und dem Schenkel 28 ist eine den Bügel 29 oder 30 auf Zug belastende, ein Tellerfederpaket aufweisende Federanordnung 32 vorgesehen.

Ein anderer Schenkel 33 jedes Bügels 29,30 ist an einem Zapfen 35 gelagert, der an einem Schlitten 36 und 37 befestigt ist.

Die Schlitten 36,37 weisen jeweils einen Rahmen 38 und 39 auf, der jeweils mit einer Führungsbuchse 40 und 41 (Fig. 3) auf beiden Führungsstangen 13 verschiebbar gelagert ist. Der Rahmen 38,39 und die Führungsbuchsen 40,41 sind jeweils durch Toleranzringe 42 relativ zueinander fixiert. Jede Führungsbuchse 40,41 ist mit einem Ringflansch 43 und 44 versehen, die in der in den Fig. 1 und 3 dargestellten geschlossenen Stellung der Transporteinheit 1 jeweils an dem zugehörigen Lager 12 des Tragelements 8 anliegen und damit den Schließweg der Schlitten 36,37 begrenzen.

Die Schlitten 36,37 sind in ihre Schließstellung gemäß Fig. 3 durch zwei Schließfedern 45 vorgespannt, von denen eine in jeder der Führungsstangen 13 angeordnet ist. Jede Schließfeder 45 ist mit einem Endhaken 46 in eine Öse 47 eingehängt, die an einem am äußeren Ende der zugehörigen Führungsbuchse 40,41 abgestützten Deckel 48 befestigt ist.

Jeder Schlitten 36,37 weist vier Anschlagschultern 49 und 50 auf, die zur axialen Positionierung von vier Haken 51 und 52 von Kupplungsteilen 53 und 54 (vgl. Fig. 2) von Mündungswerkzeughalterteilen 55 und 56 auf den Schlitten 36,37 dienen.

Die Kupplungsteile 53 und 54 sind aus Sphäroguß hoher Festigkeit hergestellt und mit den Haken 51,52 angrenzend an die Anschlagschultern 49,50 auf die Führungsbuchsen 40,41 aufgehängt. Um ein Herunterfallen der Kupplungsteile 53,54 von den Schlitten 36,37 zu verhindern, ist jeder Mündungswerkzeughalterteil 55,56 mit einem Verriegelungsbolzen 57 ausgerüstet, der mit einem Handknopf 88 versehen ist und in eine komplementäre Öffnung des zugehörigen Schlittens 36,37 eingreift.

Jeder Mündungswerkzeughalterteil 55,56 weist ferner ein insgesamt L-förmiges Halteteil 58 und 59 auf, die mit jeweils drei Schrauben 60 gemäß Fig. 2 an den Kupplungsteilen 53,54 befestigt sind. Die Halteteile 58,59 bestehen zur Gewichtsersparnis aus einer geeigneten Aluminiumlegierung. Die Schrauben 60 durchqueren jeweils eine in das Halteteil 58,59 eingesetzte Buchse 61 mit Spiel in senkrechter Richtung. Dieses Spiel gestattet eine senkrechte Einstellung des Halteteils 58,59 gegenüber seinem Kupplungsteil 53,54 zum Toleranzausgleich und zur Feineinstellung der Mündungsformen 2, 3.

Da die Transporteinheit 1 im Doppelformbetrieb eingesetzt wird, sind in jedes Halteteil 58,59 zwei Mündungswerkzeugteile 4,4 bzw. 5,5 der Mündungsformen 2,3 eingehängt. Jeder Mündungswerkzeugteil 4,5 liegt mit einem äusseren Flansch 62 (Fig. 2) auf zwei Federelementen 63 auf (Fig. 1), die die Mündungsformen 2,3 in eine obere Endstellung vorspannen. Jeder Mündungswerkzeugteil 4,5 ist ferner in Umfangsrichtung durch ein festes Anschlagstück 64 und ein durch eine Schraube 65 schwenkbares Anschlagstück 65' fixiert.

Im Bereich der Mündungsformen 2,3 ist mit einem geringen senkrechten Abstand 66 (Fig. 2) oberhalb der Halteteile 58,59 eine ein Blech aufweisende Zentriervorrichtung 67 angeordnet. Die Zentriervorrichtung ist mit Durchbrechungen 68 und 69 versehen, durch die ein Außenabschnitt 70 jedes Führungsrings 6 mit minimalem Spiel hindurchragt und in Querrichtung geführt ist. In jedes Halteteil 58,59 ist von oben eine Schraube 71 eingedreht, deren Kopf die Zentriervorrichtung 67 in der z. B. in Fig. 2 gezeigten Betriebstellung hält. Ein Schaft 72 der Schraube 71 ist in einem Schlitz 73 der Zentriervorrichtung 67 bewegbar. Der Schlitz erstreckt sich von einer Außenseite der Zentriervorrichtung 67 parallel zu einer in Fig. 1 durch einen Pfeil gekennzeichneten Verschieberichtung 74 der Mündungswerkzeughalterteile 55,56. Der Schlitz 73 weist außen eine Verbreiterung 75 auf, die den Kopf der Schraube 71 dann passieren läßt, wenn die Mündungswerkzeughalterteile 55,56 auseinandergefahren worden sind und die Zentriervorrichtung 67 um eine in zwei einen Zwischenraum zwischen sich aufweisenden Lagerarm 76' und 76'' eines Schwenklagers 76 gelagerte Schwenkachse 77 hochgeschwenkt wird. Das Schwenklager 76 ist mit Schrauben 78 an dem unteren Lager 12 des Tragelements 8 befestigt. Die Schwenkachse 77 kann sich in axialer Richtung nicht bewegen, so daß die Längsachsen der Führungsringe 6 relativ zu dem Tragelement 8 auch bei geöffneten Mündungswerkzeugteilen 4,5 festgelegt sind. Dazu ist in eine quer verlaufende mittige Gewindebohrung der Schwenkachse 77 ein als Schraube ausgebildetes Führungselement 105 eingeschraubt. Das Führungselement 105 wirkt zumindest annähernd spielfrei mit einander gegenüberliegenden Seitenflächen 106 und 107 der Lagerarme 76' und 76'' zusammen. Jeder Lagerarm 76',76'' weist eine Anschlagfläche 108 auf, die für die Zentriervorrichtung 67 eine in Eingriff mit den Führungsringen 6 geschwenkte Betriebsstellung definieren.

Fig. 2 zeigt, daß der Führungsring 6 jeweils einen obersten Bereich 79 einer Mündung 80 eines Hohlkörpers 81, in diesem Fall einer Glasflasche, formt. Zur Verdeutlichung ist in der Mündungsform 3 in Fig. 2 der Hohlkörper fortgelassen.

Sollen aus der in Fig. 3 dargestellten geschlossenen Stellung die Mündungswerkzeughalterteile 55,56 geöffnet werden, werden das Kurvenstück 21 (Fig. 1) und die Antriebsrolle 20 angehoben. Dies schwenkt den Hebel 19 um einen Winkel, dessen Größe ausreichen muß, um bei der Öffnung der Mündungswerkzeugteile 4,5 die Mündung 80 freizugeben, damit der Hohlkörper 81 aus der Mündungsform 2,3 freikommt.

Die vorerwähnte Schwenkung des Hebels 19 hat gemäß Fig. 3 eine Schwenkung der Schaltzapfen 24,24 um den gleichen Winkelbetrag zur Folge. Dabei lösen sich die Bügel 29,30 aus ihrer gegenseitigen Anschlagstellung und treiben die Schlitten 36,37 zunehmend nach außen, bis die geöffnete Endstellung der Mündungswerkzeughalterteile 55,56 erreicht ist. Diese Öffnungsbewegung geschieht gegen die zunehmende Schließkraft der beiden Schließfedern 45.

Sobald das Kurvenstück 21 wieder abgesenkt wird, schwenkt der Hebel 19 unter der Wirkung des oberen Schenkels des Kurvenstücks 21 und der Schließfedern 45 wieder zurück bis in die in Fig. 3 gezeichnete geschlossene Endstellung, in der die Mündungswerkzeughalterteile 55,56 verriegelt sind. Diese Verriegelung wird dadurch bewirkt, daß die Schaltzapfen 24,24 gemäß Fig. 3 jeweils über eine Verbindungsebene 84 der Längsachsen der Zapfen 35 gegen die Kraft der Federanordnungen 32,32 hinausgeschwenkt werden. Dazu würde die Schließkraft der beiden Schließfedern 45 nicht ausreichen. Die Verriegelung geschieht vielmehr durch den Formschluß zwischen dem oberen Schenkel des Kurvenstücks 21 und der Antriebsrolle 20. Fig. 3 zeigt, daß die Schaltzapfen 24,24 in dieser verriegelten geschlossenen Endstellung um einen Winkel 85 über die Verbindungsebene 84 hinausgeschwenkt worden sind. In der verriegelten Enstellung liegen die Bügel 29,30 jeweils mit einer Anschlagfläche 86 aneinander an und liegen die Ringflansche 43,44 der Schlitten 36,37 an dem oberen und unteren Lager 12 des Rahmens 9 des Tragelements 8 an.

PATENTANSPRÜCHE

1. Tragelement (8) für relativ zueinander bewegbare Mündungswerkzeughalterteile (55;56), die jeweils ein Mündungswerkzeugteil (4;5) eines geteilten Mündungswerkzeugs wenigstens einer Mündungsform (2;3) einer Maschine zur Herstellung von Hohlkörpern (81) aus Glas oder ähnlichen thermoplastischen Stoffen halten, wobei die wenigstens eine Mündungsform (2;3) einen einen Endbereich einer Mündung (80) des Hohlkörpers (81) formenden, ungeteilten, von dem Mündungswerkzeug gehaltenen, sich mit einem Außenabschnitt (70) aus dem Mündungswerkzeug heraus erstreckenden Führungsring (6) aufweist, dadurch gekennzeichnet, daß eine an dem Tragelement (8) angeordnete Zentriervorrichtung (67) mit dem Außenabschnitt (70) jedes Führungsrings (6) zur Fixierung der Längsachse jedes Führungsrings (6) relativ zu dem Tragelement (8) zusammenwirkt.

2. Tragelement nach Anspruch 1, dadurch gekennzeichnet, daß die Zentriervorrichtung (67) ein den Außenabschnitt (70) jedes Führungsrings (6) in einer Durchbrechung (68;69) aufnehmendes Blech aufweist.

3. Tragelement nach Anspruch 1 oder 2, dadurch gekennzeichnet, daß die Zentriervorrichtung (67) an dem Tragelement (8) weg von und außer Eingriff mit dem wenigstens einen Führungsring (6) schwenkbar (vgl. 76,77) gelagert ist.

4. Tragelement nach Anspruch 3, dadurch gekennzeichnet, daß die Zentriervorrichtung (67) mit einer in zwei einen Zwischenraum zwischen sich aufweisenden Lagerarmen (76';76'') des Tragelements (8) gelagerten Schwenkachse (77) versehen ist, und daß sich in den Zwischenraum ein mit einander gegenüberliegenden Seitenflächen der Lagerarme zusammenwirkendes, die Schwenkachse (77) in axialer Richtung festlegendes Führungselement (105) der Schwenkachse (77) erstreckt.

5. Tragelement nach Anspruch 4, dadurch gekennzeichnet, daß das Führungselement (105) als mit der Schwenkachse (77) lösbar verbundene Schraube ausgebildet ist.

6. Tragelement nach Anspruch 4 oder 5, dadurch gekennzeichnet, daß die Lagerarme (76';76'') jeweils eine für die Zentriervorrichtung (67) eine in Eingriff mit dem wenigstens einen Führungsring (6) geschwenkte Betriebsstellung definierende Anschlagfläche (108) aufweisen.

7. Tragelement nach einem der Ansprüche 3 bis 6, dadurch gekennzeichnet, daß die Zentriervorrichtung (67) durch einen Kopf wenigstens einer in den Mündungswerkzeughalterteil (55;56) gedrehten Schraube (71) in ihrer in Eingriff mit dem wenigstens einen Führungsring (6) geschwenkten Betriebsstellung gehalten wird, wobei ein Schaft (72) der Schraube (71) in einem Schlitz (73) der Zentriervorrichtung (67) bewegbar ist.

8. Tragelement nach Anspruch 7, dadurch gekennzeichnet, daß der Schlitz (73) sich von einer Außenseite der Zentriervorrichtung (67) parallel zu einer Verschieberichtung (74) der Mündungswerkzeughalterteile (55;56) erstreckt.

Fig. 1

1/3

0043033

Fig. 2

2/3

0043033

Fig. 3

0043033
Nummer der Anmeldung

# EUROPÄISCHER RECHERCHENBERICHT

EP 81 10 4674

Europäisches
Patentamt

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| A | <u>DE - A - 2 243 489</u> (TOKYO SHIBAURA DENKI) <br><br> * Figuren 8-11 * <br><br> & US - A - 3 834 884 <br> & FR. - A - 2 152 644 <br><br> -- | | C 03 B 9/28 <br> 9/195 <br> 9/353 |
| A | <u>US - A - 3 244 499</u> (WILEY) <br><br> ---- | | |

RECHERCHIERTE SACHGEBIETE (Int. Cl.³)

C 03 B 9/193
9/195
9/28
9/30
9/34
9/353

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 13-10-1981 | VAN DEN BOSSCHE |

EPA form 1503.1  06.78